(19) Europäisches Patentamt
European Patent Office
Office européen des brevets

(11) **EP 4 647 889 A1**

(12) **EUROPEAN PATENT APPLICATION**
published in accordance with Art. 153(4) EPC

(43) Date of publication:
**12.11.2025 Bulletin 2025/46**

(21) Application number: **24749667.2**

(22) Date of filing: **30.01.2024**

(51) International Patent Classification (IPC):
**G06F 3/06** (2006.01)    **G06F 16/22** (2019.01)

(52) Cooperative Patent Classification (CPC):
**G06F 3/06; G06F 16/22; G06N 20/00**

(86) International application number:
**PCT/CN2024/074592**

(87) International publication number:
**WO 2024/160188 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2023 CN 202310117413**

(71) Applicant: **Huawei Technologies Co., Ltd.
Shenzhen, Guangdong 518129 (CN)**

(72) Inventors:
• **YAO, Xin
  Shenzhen, Guangdong 518129 (CN)**
• **ZHANG, Shunkang
  Shenzhen, Guangdong 518129 (CN)**
• **CHEN, Renhai
  Shenzhen, Guangdong 518129 (CN)**
• **ZHANG, Gong
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **DATA PROCESSING METHOD AND APPARATUS**

(57)    A data processing method and apparatus are provided, and relate to the storage field. The method includes: obtaining a first keyword corresponding to to-be-read data (S101); searching a learned index model for a first leaf node corresponding to the first keyword (S102); determining, according to a first model algorithm corresponding to the first leaf node, a first storage unit corresponding to the first keyword (S103), where the first storage unit corresponds to one or more pieces of user data, where when the first storage unit corresponds to a plurality of pieces of user data, the first storage unit stores a first pointer pointing to a collision array, or when the first storage unit corresponds to one piece of user data, the first storage unit stores the user data; and searching the collision array to which the first pointer points for the to-be-read data (S104), or determining the user data stored in the first storage unit as the to-be-read data (S105). This application is applied to data storage.

FIG. 5

EP 4 647 889 A1

## Description

This application claims priority to Chinese Patent Application No. 202310117413.7, filed with the China National Intellectual Property Administration on January 30, 2023 and entitled "DATA PROCESSING METHOD AND APPARATUS", which is incorporated herein by reference in its entirety.

## TECHNICAL FIELD

This application relates to the storage field, and in particular, to a data processing method and apparatus.

## BACKGROUND

With development of information technologies, data amounts in various fields such as social media, internet, cloud computing, and on-board systems are increasing. To read/write stored data more efficiently, a suitable data index system needs to be constructed to manage the stored data.

As learned index models are increasingly used in various application scenarios, how to improve performance of the learned index models has become a problem that needs to be resolved in the field currently.

## SUMMARY

This application provides a data processing method and apparatus, to improve performance of a learned index model.

According to a first aspect, a data reading method is provided, including: obtaining a first keyword corresponding to to-be-read data; searching a learned index model for a first leaf node corresponding to the first keyword; determining, according to a first model algorithm corresponding to the first leaf node, a first storage unit corresponding to the first keyword, where the first storage unit corresponds to one or more pieces of user data, where when the first storage unit corresponds to a plurality of pieces of user data, the first storage unit stores a first pointer pointing to a collision array, or when the first storage unit corresponds to one piece of user data, the first storage unit stores the user data; and searching the collision value to which the first pointer points for the to-be-read data, or determining the user data stored in the first storage unit as the to-be-read data. In the foregoing method, the storage unit determined by the learned index model may correspond to one piece of user data, or may correspond to a plurality of pieces of user data. When corresponding to one piece of user data, the storage unit stores the user data; or when corresponding to a plurality of pieces of user data, the storage unit stores a pointer pointing to a collision array. In this way, regardless of whether data collision exists in the storage unit, the one or more pieces of user data corresponding to the storage unit can be normally accessed. In this way, storage overheads can be greatly reduced while high-performance dynamic operations can still be met. Therefore, this is highly competitive in a scenario in which massive data is processed and memory is limited.

In an implementation, the first storage unit includes a first field, and the first field indicates whether the first storage unit stores user data. In this way, whether the storage unit stores the user data may be learned through reading of the first field. In this case, when it is determined that the storage unit stores the user data, the user data in the storage unit is directly read.

In an implementation, when the first field indicates that the first storage unit stores no user data, the first storage unit further includes a second field, and the second field indicates a quantity of pieces of user data corresponding to the first storage unit. In this way, whether the storage unit is empty or the storage unit stores a plurality of pieces of user data may be learned through reading of the second field.

In an implementation, searching the collision value to which the first pointer points for the to-be-read data includes: when it is determined, based on the first field, that the first storage unit stores no user data, and it is determined, based on the second field, that the first storage unit corresponds to a plurality of pieces of user data, searching the collision value to which the first pointer points for the to-be-read data. In the foregoing implementation, the to-be-read data can be quickly determined.

In an implementation, the method further includes: when it is determined, based on the first field, that the first storage unit stores no user data, and it is determined, based on the second field, that the quantity of pieces of user data corresponding to the first storage unit is zero, determining that the to-be-read data does not exist. In the foregoing implementation, it can be quickly determined that the to-be-read data does not exist.

In an implementation, determining the user data stored in the first storage unit as the to-be-read data includes: when it is determined, based on the first field, that the first storage unit stores user data, determining the user data stored in the first storage unit as the to-be-read data. In the foregoing implementation, the to-be-read data can be quickly determined.

In an implementation, a model algorithm of a leaf node in the learned index model satisfies Formula 1:

$$P = \min\left[ S \times (\text{key} - K),\ MR \right]$$ 

Formula 1.

Herein, key represents a keyword of user data, P represents a storage location of a storage unit corresponding to the user data, and S, K, and MR are parameters of the model algorithm of the leaf node. By using the foregoing model algorithm, the user data can be efficiently and conveniently allocated to a corresponding storage unit.

In an implementation, searching the collision value to which the first pointer points for the to-be-read data includes: searching, through binary search, the collision value to which the first pointer points for the to-be-read data. In the foregoing implementation, the to-be-read data can be quickly determined.

In an implementation, when the first storage unit corresponds to a plurality of pieces of user data, the first storage unit includes a third field, and the third field is used to store the first pointer; or when the first storage unit corresponds to one piece of user data, the first storage unit includes a fourth field, and the fourth field is used to store the user data.

According to a second aspect, a data storage method is provided, including: obtaining to-be-written data and a first keyword corresponding to the to-be-written data; searching a learned index model for a first leaf node corresponding to the first keyword; determining, according to a first model algorithm corresponding to the first leaf node, a first storage unit corresponding to the first keyword, where the first storage unit corresponds to one or more pieces of user data, where when the first storage unit corresponds to a plurality of pieces of user data, the first storage unit stores a first pointer pointing to a collision array, or when the first storage unit corresponds to one piece of user data, the first storage unit stores the user data; and storing the to-be-written data into a collision value to which the first pointer points, or storing the to-be-written data into the first storage unit. In the foregoing method, the storage unit determined by the learned index model may correspond to one piece of user data, or may correspond to a plurality of pieces of user data. When corresponding to one piece of user data, the storage unit stores the user data; or when corresponding to a plurality of pieces of user data, the storage unit stores a pointer pointing to a collision array. In this way, regardless of whether data collision exists in the storage unit, the one or more pieces of user data corresponding to the storage unit can be normally accessed. In this way, storage overheads can be greatly reduced while high-performance dynamic operations can still be met. Therefore, this is highly competitive in a scenario in which massive data is processed and memory is limited.

In an implementation, the first storage unit includes a first field, and the first field indicates whether the first storage unit stores user data.

In an implementation, when the first field indicates that the first storage unit stores no the user data, the first storage unit further includes a second field, and the second field indicates a quantity of pieces of user data corresponding to the first storage unit.

In an implementation, storing the to-be-written data into the first storage unit includes: when it is determined, based on the first field, that the first storage unit stores no user data, and it is determined, based on the second field, that the quantity of pieces of user data corresponding to the first storage unit is zero, storing the to-be-written data into the first storage unit.

In an implementation, storing the to-be-written data into the collision value to which the first pointer points includes: when it is determined, based on the first field, that the first storage unit stores user data, storing the to-be-written data and the user data stored in the first storage unit together into the collision value to which the first pointer points; or storing the to-be-written data into the collision value to which the first pointer points includes: when it is determined, based on the first field, that the first storage unit stores no user data, and it is determined, based on the second field, that the first storage unit corresponds to a plurality of pieces of user data, storing the to-be-written data into the collision value to which the first pointer points.

In an implementation, the method further includes: after the to-be-written data is stored into the collision value to which the first pointer points, or after the to-be-written data is stored into the first storage unit, updating the first field and the second field.

In an implementation, a model algorithm of a leaf node in the learned index model satisfies Formula 1:

$$P = \min\left[ S \times (\text{key} - K),\ MR \right]$$ 

Formula 1.

Herein, key represents a keyword of user data, P represents a storage location of a storage unit corresponding to the user data, and S, K, and MR are parameters of the model algorithm of the leaf node.

In an implementation, the method further includes: determining, through binary search, a storage location of the to-be-written data in the collision value to which the first pointer points.

In an implementation, when the first storage unit corresponds to a plurality of pieces of user data, the first storage unit includes a third field, and the third field is used to store the first pointer; or when the first storage unit corresponds to one piece of user data, the first storage unit includes a fourth field, and the fourth field is used to store the user data.

In an implementation, the method further includes: when a quantity of pieces of user data corresponding to the first storage unit reaches a quantity threshold, updating the first leaf node to one or more second leaf nodes, where in a model algorithm corresponding to the one or more second leaf nodes, a quantity of pieces of user data corresponding to each storage unit is less than the quantity threshold; and updating, according to a preset method, a model algorithm corresponding to an internal node in the learned index model, where the preset method includes: in the learned index model, sequentially determining, in a direction from a child node to a parent node after a child node is updated, whether a model algorithm of a parent node of the child node is affected; and if the model algorithm of the parent node is affected, updating the model algorithm of the parent node until the model algorithm of the internal node in the learned index model is updated. By using the foregoing manner, when only model algorithms of some nodes in the index model are updated, it can be ensured that the quantity of pieces of user data in the collision array corresponding to the storage unit does not keep increasing, thereby improving read/write efficiency.

According to a third aspect, a model update method is provided. The method is applied to a learned index model, and the learned index model includes an internal node and a leaf node. The internal node is configured to search for, based on a keyword of user data, a leaf node corresponding to the user data, the leaf node is configured to search for, based on a keyword of user data, a storage unit corresponding to the user data, and the storage unit corresponds to one or more pieces of user data. When the storage unit corresponds to a plurality of pieces of user data, the storage unit stores a first pointer pointing to a collision array, or when the storage unit corresponds to one piece of user data, the storage unit stores the user data. The method includes: when a quantity of pieces of user data corresponding to a first storage unit reaches a quantity threshold, updating the first leaf node to one or more second leaf nodes, where the first storage unit is any storage unit in the learned index model, the first leaf node is a leaf node corresponding to the first storage unit in the learned index model, and in a model algorithm corresponding to the one or more second leaf nodes, a quantity of pieces of user data corresponding to each storage unit is less than the quantity threshold; and updating, according to a preset method, a model algorithm corresponding to an internal node in the learned index model, where the preset method includes: in the learned index model, sequentially determining, in a direction from a child node to a parent node after a child node is updated, whether a model algorithm of a parent node of the child node is affected; and if the model algorithm of the parent node is affected, updating the model algorithm of the parent node until the model algorithm of the internal node in the learned index model is updated. By using the foregoing method, when only model algorithms of some nodes in the index model are updated, it can be ensured that the quantity of pieces of user data in the collision array corresponding to the storage unit does not keep increasing, thereby improving read/write efficiency.

According to a fourth aspect, a data processing apparatus is provided, including: an obtaining unit, configured to obtain a first keyword corresponding to to-be-read data; and a processing unit, configured to search a learned index model for a first leaf node corresponding to the first keyword. The processing unit is further configured to determine, according to a first model algorithm corresponding to the first leaf node, a first storage unit corresponding to the first keyword. The first storage unit corresponds to one or more pieces of user data. When the first storage unit corresponds to a plurality of pieces of user data, the first storage unit stores a first pointer pointing to a collision array, or when the first storage unit corresponds to one piece of user data, the first storage unit stores the user data. The processing unit is further configured to: search the collision value to which the first pointer points for the to-be-read data, or determine the user data stored in the first storage unit as the to-be-read data.

In an implementation, the first storage unit includes a first field, and the first field indicates whether the first storage unit stores user data.

In an implementation, when the first field indicates that the first storage unit stores no user data, the first storage unit further includes a second field, and the second field indicates a quantity of pieces of user data corresponding to the first storage unit.

In an implementation, that the processing unit is further configured to search the collision value to which the first pointer points for the to-be-read data includes: The processing unit is further configured to: when it is determined, based on the first field, that the first storage unit stores no user data, and it is determined, based on the second field, that the first storage unit corresponds to a plurality of pieces of user data, search the collision value to which the first pointer points for the to-be-read data.

In an implementation, the processing unit is further configured to: when it is determined, based on the first field, that the first storage unit stores no user data, and it is determined, based on the second field, that the quantity of pieces of user data corresponding to the first storage unit is zero, determine that the to-be-read data does not exist.

In an implementation, that the processing unit is further configured to determine the user data stored in the first storage unit as the to-be-read data includes: The processing unit is further configured to: when it is determined, based on the first field, that the first storage unit stores user data, determine the user data stored in the first storage unit as the to-be-read data.

In an implementation, a model algorithm of a leaf node in the learned index model satisfies Formula 1:

$$P = \min\left[ S \times (\text{key} - K), \text{MR} \right] \qquad \text{Formula 1.}$$

Herein, key represents a keyword of user data, P represents a storage location of a storage unit corresponding to the user data, and S, K, and MR are parameters of the model algorithm of the leaf node.

In an implementation, that the processing unit is further configured to search the collision value to which the first pointer points for the to-be-read data includes: The processing unit is further configured to search, through binary search, the collision value to which the first pointer points for the to-be-read data.

In an implementation, when the first storage unit corresponds to a plurality of pieces of user data, the first storage unit includes a third field, and the third field is used to store the first pointer; or when the first storage unit corresponds to one piece of user data, the first storage unit includes a fourth field, and the fourth field is used to store the user data.

According to a fifth aspect, a data processing apparatus is provided, including: an obtaining unit, configured to obtain to-be-written data and a first keyword corresponding to the to-be-written data; and a processing unit, configured to search a learned index model for a first leaf node corresponding to the first keyword. The processing unit is further configured to determine, according to a first model algorithm corresponding to the first leaf node, a first storage unit corresponding to the first keyword. The first storage unit corresponds to one or more pieces of user data. When the first storage unit corresponds to a plurality of pieces of user data, the first storage unit stores a first pointer pointing to a collision array, or when the first storage unit corresponds to one piece of user data, the first storage unit stores the user data. The processing unit is further configured to: store the to-be-written data into a collision value to which the first pointer points, or store the to-be-written data into the first storage unit.

In an implementation, the first storage unit includes a first field, and the first field indicates whether the first storage unit stores user data.

In an implementation, when the first field indicates that the first storage unit stores no user data, the first storage unit further includes a second field, and the second field indicates a quantity of pieces of user data corresponding to the first storage unit.

In an implementation, that the processing unit is further configured to store the to-be-written data into the first storage unit includes: The processing unit is further configured to: when it is determined, based on the first field, that the first storage unit stores no user data, and it is determined, based on the second field, that the quantity of pieces of user data corresponding to the first storage unit is zero, store the to-be-written data into the first storage unit.

In an implementation, that the processing unit is further configured to store the to-be-written data into the collision value to which the first pointer points includes: The processing unit is further configured to: when it is determined, based on the first field, that the first storage unit stores user data, store the to-be-written data and the user data stored in the first storage unit together into the collision value to which the first pointer points. Alternatively, that the processing unit is further configured to store the to-be-written data into the collision value to which the first pointer points includes: The processing unit is further configured to: when it is determined, based on the first field, that the first storage unit stores no user data, and it is determined, based on the second field, that the first storage unit corresponds to a plurality of pieces of user data, store the to-be-written data into the collision value to which the first pointer points.

In an implementation, the processing unit is further configured to: after the to-be-written data is stored into the collision value to which the first pointer points, or after the to-be-written data is stored into the first storage unit, update the first field and the second field.

In an implementation, a model algorithm of a leaf node in the learned index model satisfies Formula 1:

$$P = \min \left[ S \times (\text{key} - K), MR \right] \qquad \text{Formula 1.}$$

Herein, key represents a keyword of user data, P represents a storage location of a storage unit corresponding to the user data, and S, K, and MR are parameters of the model algorithm of the leaf node.

In an implementation, the processing unit is further configured to: determine, through binary search, a storage location of the to-be-written data in the collision value to which the first pointer points.

In an implementation, when the first storage unit corresponds to a plurality of pieces of user data, the first storage unit includes a third field, and the third field is used to store the first pointer; or when the first storage unit corresponds to one piece of user data, the first storage unit includes a fourth field, and the fourth field is used to store the user data.

In an implementation, the data processing apparatus further includes: a leaf node update unit, configured to: when a quantity of pieces of user data corresponding to the first storage unit reaches a quantity threshold, update the first leaf node to one or more second leaf nodes, where in a model algorithm corresponding to the one or more second leaf nodes, a quantity of pieces of user data corresponding to each storage unit is less than the quantity threshold; and an internal node update unit, configured to update, according to a preset method, a model algorithm corresponding to an internal node in the learned index model. The preset method includes: in the learned index model, sequentially determining, in a direction from a child node to a parent node after a child node is updated, whether a model algorithm of a parent node of the child node is affected; and if the model algorithm of the parent node is affected, updating the model algorithm of the parent node until the model algorithm of the internal node in the learned index model is updated.

According to a sixth aspect, a data processing apparatus is provided. The data processing apparatus is used in a learned index model. The learned index model includes an internal node and a leaf node. The internal node is configured to search for, based on a keyword of user data, a leaf node corresponding to the user data, the leaf node is configured to search for, based on a keyword of user data, a storage unit corresponding to the user data, and the storage unit corresponds to one or more pieces of user data. When the storage unit corresponds to a plurality of pieces of user data, the storage unit stores a first pointer pointing to a collision array, or when the storage unit corresponds to one piece of user data, the storage unit stores the user data. The data processing apparatus includes: a leaf node update unit, configured to: when a quantity of pieces of user data corresponding to a first storage unit reaches a quantity threshold, update the first leaf node to one or more second leaf nodes, where the first storage unit is any storage unit in the learned index model, the first leaf node is a leaf node corresponding to the first storage unit in the learned index model, and in a model algorithm corresponding to the one or more second leaf nodes, a quantity of pieces of user data corresponding to each storage unit is less than the quantity threshold; and an internal node update unit, configured to update, according to a preset method, a model algorithm corresponding to an internal node in the learned index model. The preset method includes: in the learned index model, sequentially determining, in a direction from a child node to a parent node after a child node is updated, whether a model algorithm of a parent node of the child node is affected; and if the model algorithm of the parent node is affected, updating the model algorithm of the parent node until the model algorithm of the internal node in the learned index model is updated.

According to a seventh aspect, a data processing apparatus is provided, including a memory and a processor. The memory is configured to store computer instructions, and the processor is configured to invoke the computer instructions from the memory and run the computer instructions, to implement the method according to any one of the first aspect or the implementations of the first aspect, or implement the method according to any one of the second aspect or the implementations of the second aspect, or implement the method according to any one of the third aspect or the implementations of the third aspect.

According to an eighth aspect, a storage system is provided, including one or more storage servers. The one or more storage servers are configured to store data, and all or some of the one or more storage servers are configured to perform the method according to any one of the first aspect or the implementations of the first aspect, or all or some of the one or more storage servers are configured to perform the method according to any one of the second aspect or the implementations of the second aspect, or all or some of the one or more storage servers are configured to perform the method according to any one of the third aspect or the implementations of the third aspect.

According to a ninth aspect, a chip is provided, including a memory and a processor. The memory is configured to store computer instructions, and the processor is configured to invoke the computer instructions from the memory and run the computer instructions, to implement the method according to any one of the first aspect or the implementations of the first aspect, or implement the method according to any one of the second aspect or the implementations of the second aspect, or implement the method according to any one of the third aspect or the implementations of the third aspect.

According to a tenth aspect, a computer-readable storage medium is provided. The computer-readable storage medium stores instructions. When the instructions are run on a processor, the method according to any one of the first aspect or the implementations of the first aspect, or the method according to any one of the second aspect or the implementations of the second aspect, or the method according to any one of the third aspect or the implementations of the third aspect is implemented.

According to an eleventh aspect, a computer program product is provided. The computer program product includes instructions. When the instructions are run on a processor, the method according to any one of the first aspect or the implementations of the first aspect, or the method according to any one of the second aspect or the implementations of the second aspect, or the method according to any one of the third aspect or the implementations of the third aspect is implemented.

For beneficial effects of the second aspect to the eleventh aspect, refer to beneficial effects of the first aspect and the designs in the first aspect. Details are not described herein again.

In this application, based on implementations according to the foregoing aspects, the implementations may be further combined to provide more implementations.

## BRIEF DESCRIPTION OF DRAWINGS

FIG. 1 is a diagram 1 of a structure of a learned index model according to this application;
FIG. 2 is a diagram 2 of a structure of a learned index model according to this application;
FIG. 3 is a diagram 3 of a structure of a learned index model according to this application;
FIG. 4 is a diagram 4 of a structure of a learned index model according to this application;
FIG. 5 is a diagram 5 of a structure of a learned index model according to this application;

FIG. 6 is a diagram 6 of a structure of a learned index model according to this application;

FIG. 7 is a diagram of a structure of a storage unit according to this application;

FIG. 8 is a diagram of pseudo-code of a construction algorithm of a leaf node in a learned index model according to this application;

FIG. 9 is a schematic flowchart of a data reading method according to this application;

FIG. 10 is a diagram of pseudo-code of a data reading method according to this application;

FIG. 11 is a schematic flowchart of a data writing method according to this application;

FIG. 12 is a diagram of pseudo-code of a data writing method according to this application;

FIG. 13 is a schematic flowchart 1 of a model update method according to this application;

FIG. 14 is a schematic flowchart 2 of a model update method according to this application;

FIG. 15 is a diagram of pseudo-code of a model update method according to this application;

FIG. 16 is a diagram 1 of a structure of a data processing apparatus according to this application; and

FIG. 17 is a diagram 2 of a structure of a data processing apparatus according to this application.

## DESCRIPTION OF EMBODIMENTS

The following describes technical solutions in embodiments with reference to accompanying drawings in embodiments. To clearly describe the technical solutions in embodiments, terms such as "first" and "second" are used in embodiments of this application to distinguish between same or similar items that have basically same functions or purposes. A person skilled in the art may understand that the terms such as "first" and "second" do not limit a quantity or an execution sequence, and the terms such as "first" and "second" do not indicate a definite difference. In addition, in embodiments, terms such as "example" or "for example" represent giving an example, an illustration, or a description. Any embodiment or design described as an "example" or "for example" in embodiments should not be construed as being more preferred or having more advantages than other embodiments or designs. To be precise, use of the terms such as "example" or "for example" is intended to present a related concept in a specific manner for ease of understanding.

First, some related technologies in embodiments of this application are described.

A learned index model is an index model that uses a machine learning algorithm to perform fitting based on data distribution, to use the model to predict a location of a keyword-value (Key-value) of the data.

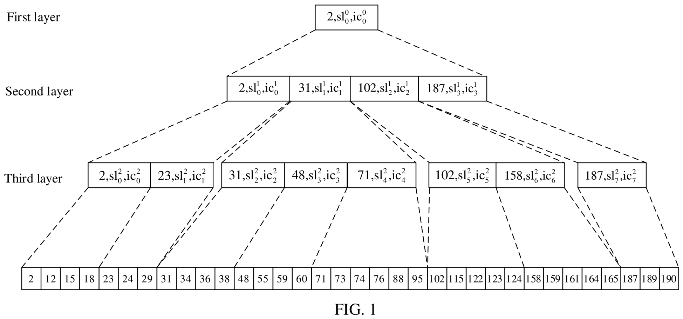

For example, FIG. 1 is a diagram 1 of a structure of the learned index model according to an embodiment of this application. Nodes at layers in the learned index model respectively correspond to respective model algorithms, and are used to calculate a location of a node at a next layer. A root node is used as an example. A model algorithm of the root node may be represented by using three elements (that is, "2", " $sl_0^0$ ", and " $ic_0^0$ " in the figure). "2" represents a minimum keyword corresponding to the node, " $sl_0^0$ " represents a slope of the model algorithm, and " $ic_0^0$ " represents an intercept of the model algorithm. In other words, the model algorithm of the root node may be represented by Formula (1):

$$P1 = sl_0^0 \times key1 + ic_0^0 \qquad\qquad \text{Formula (1).}$$

Herein, key1 is a key of to-be-accessed data, and P1 is a node location of the to-be-accessed data at a next layer.

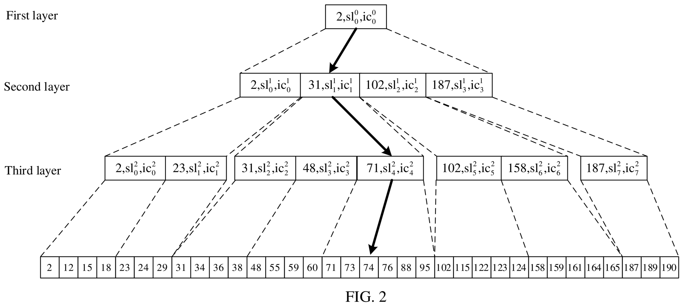

For example, when user data a needs to be accessed, it is assumed that a key of the user data a is 74. As shown in FIG. 2, a node location of the user data at a second layer is first determined according to the model algorithm (that is, Formula (1)) of the root node and the key (that is, 74) of the user data a. Then, a node location of the user data at a third layer is determined according to a model algorithm (which may be represented as $P2 = sl_1^1 \times key1 + ic_1^1$ ) of a node at the second layer and the key (that is, 74) of the user data a. Then, a storage location of a storage unit corresponding to the user data is determined according to a model algorithm of a node at the third layer and the key (that is, 74) of the user data a. In this way, the to-be-accessed user data can be obtained by reading data in the storage unit.

It should be noted that the "user data" in embodiments of this application may be understood as data stored in an index model for implementing a corresponding service function. During running of a system, various applications can obtain the user data by accessing the index model, to implement a corresponding service function. Other data corresponding to the user data is referred to as metadata. The metadata is data (data that describes other data) used to describe the user data, and includes but is not limited to information such as an actual address at which the user data is stored, a mapping relationship between a logical address and the actual address, and an attribute of the user data.

It can be learned that, on one hand, compared with a conventional index model (such as a B+tree), the learned index model is data-driven. This is, different models may be learned based on data distribution, to implement adaptive adjustment. Therefore, in most scenarios, the learned index model has much higher memory efficiency and access performance than the conventional index model. On the other hand, an existing learned index model has good performance only for static data management, and only a few learned index systems provide support for dynamic data management. In addition, to support dynamic data management, an existing system has large overheads, leading to reduced storage efficiency. As a result, the existing system cannot be applied to a scenario of massive data.

To facilitate understanding of the technical solutions provided in embodiments of the present invention, the following describes a learned index model used in a related technology.

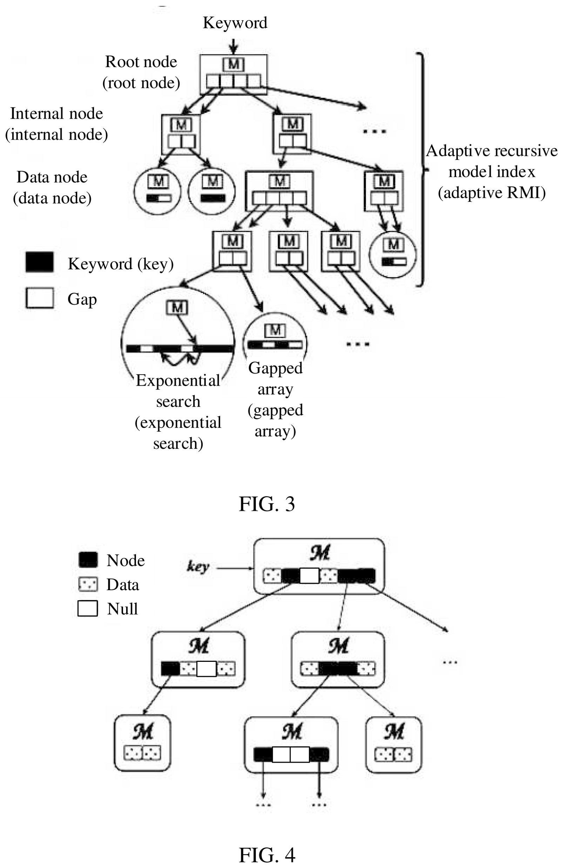

In a first related technology, to facilitate management of dynamic data, as shown in FIG. 3, a large amount of free space may be reserved in a leaf node, so that when new data is written, the new data may be inserted into the reserved space. Specifically, this technology is used in an updatable adaptive learned index ALEX (updatable adaptive learned index, ALEX) learned index model proposed by the Microsoft team, to support operations such as dynamic insertion, dynamic lookup, and range queries. The index inherits a tree structure of the conventional B+tree and uses a top-down construction mode. At a root node (root node), adaptive segmentation is performed on existing data. A cost model (cost model) is constructed based on statistics recorded during runtime (runtime). In this way, memory and performance of a current index are evaluated, to determine in real time whether to perform local structure adjustment or retrain the model.

In the foregoing first related technology, dynamic data management may be supported. However, in the foregoing related technology, to support a dynamic insertion operation, a large amount of free space is reserved in each leaf node, to reduce performance overheads caused by moving existing data when new data is inserted. However, solving dynamic insertion in this way results in large memory overheads for an entire index system in its end-to-end implementation. In addition, because the index system is constructed from top to bottom, the root node cannot perceive global data distribution. When data distribution is complex and has obvious nonlinearity, the root node needs to be expanded continuously to accommodate more leaf nodes to fit current data distribution. In this scenario, an index size (index size) increases significantly.

In addition, the first related technology described above has obvious performance degradation in processing actual complex data distribution. The actual data distribution is usually complex and a data amount is large. Therefore, the learned index model needs to continuously collect runtime statistics to update the cost model and make decisions in real time. This process is complex, especially when data is inserted in a specific order, which can cause the learned index model to frequently adjust its index structure, resulting in significant performance degradation. If free memory of the leaf node is restricted for improving memory efficiency, read/write performance of the learned index model will be greatly reduced.

In a second related technology, a log-structured merge-tree (log-structured merge-Tree, LSM-tree) technology may be used to create a plurality of indexes whose sizes are $2^1$, $2^2$, ..., and $2^k$. Each time a data amount of a smaller index at an upper level reaches a preset value, adjacent two levels of indexes are extracted and sorted, and then the model is retrained for the sorted data. For example, a piecewise geometric model (Piecewise geometric model, PGM) uses the second related technology. In addition, in the PGM, a piecewise linear approximation (piecewise linear approximation, PLA) model is used to index static data from bottom to top. The PLA model can ensure an error range. Therefore, the PGM starts to predict target data from a root node, and further searches for a next-level model within an error range of a predicted location until the target data is found at the leaf node or the target data does not exist.

In the foregoing second related technology, although dynamic data management is implemented by using the LSM-tree technology, the technology is a classic design for write optimization. A disadvantage is that during data lookup, a plurality of index structures needs to be searched until the target data is found or the data does not exist. This process causes large performance overheads, and as a data amount increases, a quantity of indexes reserved in the LSM-tree also continuously grows, resulting in progressively large overheads for each lookup. In addition, because the design keeps data in a plurality of different indexes, range queries cannot be efficiently supported. When a user needs to search for consecutive data in a range, the PGM needs to first query the data in the plurality of indexes separately, then combine the data, and return a final result.

In a third related technology, as shown in FIG. 4, when new data is dynamically inserted, if a collision occurs during model prediction, the index system deepens a tree height, creates a new internal node, and retrains a linear model at the internal node to ensure that a collision node is allocated to a new location based on a prediction result of the new model, thereby resolving the collision and ensuring precise positioning. For example, an LIPP model uses this technology.

In the foregoing third related technology, an idea of precise positioning is used. When a data collision occurs, a new node is created to resolve the collision and ensure accuracy of model prediction. Although this design can reduce search overheads caused by output of each model, a large quantity of data collisions may be caused when data distribution is complex. In this design, new nodes are continuously created, causing end-to-end memory overheads of the index to increase sharply. In addition, in a scenario of managing complex data, a tree height of the index usually increases sharply. Therefore, when a query or insertion operation is performed, non-contiguous memory needs to be accessed a plurality of times, and a caching mechanism cannot be used. Therefore, during dynamic insertion and queries, memory access overheads may become a bottleneck, resulting in poor performance.

It can be learned that, in the learned index model provided in the foregoing related technology, a dynamic operation on data is usually supported at the cost of storage efficiency or index performance. Therefore, in a case of massive data processing and a high-performance requirement, a problem that a requirement cannot be met may occur.

For the foregoing problem, an embodiment of the present invention provides a technical solution. First, in this technical solution, a manner of storing user data in a storage unit is improved. Specifically, in this embodiment of the present invention, one storage unit may correspond to one or more pieces of user data. Based on different quantities of pieces of the user data corresponding to the storage unit, when the storage unit corresponds to a plurality of pieces of user data (that is, collision data exists in this case), the plurality of pieces of user data are stored in a collision array corresponding to the storage unit. Besides, the storage unit stores a pointer pointing to the collision array. In addition, when the storage unit corresponds to one piece of user data (that is, no collision data exists in this case), the user data is directly stored in the storage unit for ease of access.

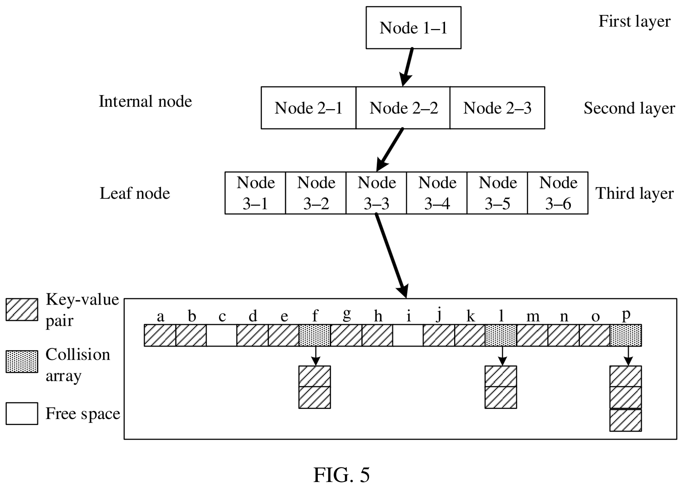

For example, as shown in FIG. 5, in the learned index model provided in this embodiment of this application, two data structures may be used to store and retrieve a key-value (key-value) pair: a leaf node (leaf segment) and an internal node (inner segment). The internal node is used to store information about a path from a root node to any leaf node, to find a corresponding leaf node. The leaf node indicates a location of a storage unit. For example, in a leaf node 3-3, a storage unit corresponding to user data can be determined from a storage unit a to a storage unit p based on a key of the user data.

In the storage unit a to the storage unit p, each storage unit may correspond to one piece of user data, or may correspond to a plurality of pieces of user data. In addition, it may be understood that an idle storage unit (that is, "free space" shown in FIG. 5) may be further included.

When the storage unit corresponds to one piece of user data, the storage unit records the user data (the user data is represented by using a key-value pair in FIG. 5). When the storage unit corresponds to a plurality of pieces of user data, the storage unit records a pointer pointing to a collision array. The collision array may be used to store the plurality of pieces of user data corresponding to the storage unit.

For example, in FIG. 5, storage units a, b, d, e, g, h, j, k, m, n, and o each correspond to one piece of user data, and the storage units record the user data. In this way, user data can be read by accessing these storage units. In addition, in FIG. 5, storage units f, l, and p each correspond to a plurality of pieces of user data, and the storage units record pointers pointing to collision arrays. In this way, pointers may be obtained by accessing these storage units, and storage addresses of the collision arrays are determined, so that the collision arrays may be searched for user data that needs to be accessed.

In this embodiment of this application, one storage unit may correspond to one piece of user data, or may correspond to a plurality of pieces of user data. When corresponding to one piece of user data, the storage unit stores the user data; or when corresponding to a plurality of pieces of user data, the storage unit stores a pointer pointing to a collision array. In this way, storage overheads can be greatly reduced while high-performance dynamic operations can still be met. Therefore, this is highly competitive in a scenario in which massive data is processed and memory is limited.

Further, in an implementation, in the learned index model provided in this embodiment of this application, a model algorithm of a leaf node satisfies the following formula:

$$P = \min \left[ sl \times \left( key - k \right), MR \right]$$
Formula (2).

Herein, key represents a keyword of user data, P represents a storage location of a storage unit corresponding to the user data, and sl, k, and MR are parameters of the model algorithm of the leaf node. Specifically, sl may be understood as a slope of the model algorithm, k is a minimum key-value of the model algorithm, and MR is an intercept of the model algorithm. In this embodiment of this application, the leaf node stores data in a manner of a learned hash table, and a maximum length of the leaf node is controlled by the intercept MR.

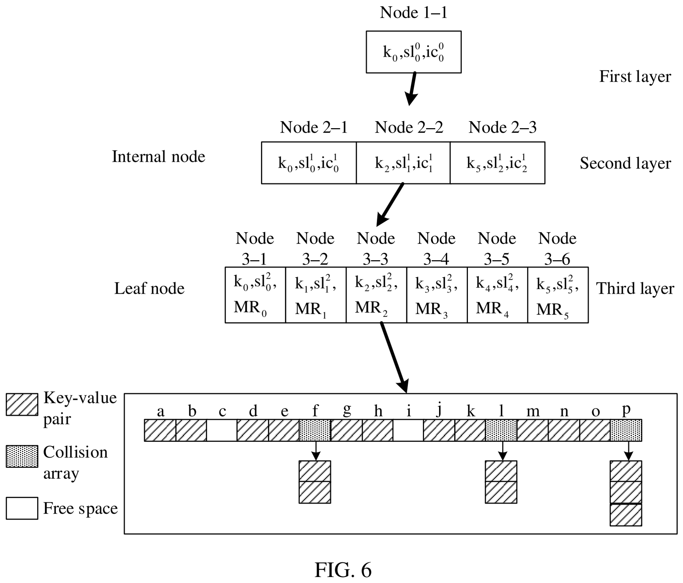

For example, as shown in FIG. 6, in a leaf node, parameters of a model algorithm of a node 3-1 include and . That is, it indicates that the model algorithm of the node 3-1 satisfies the following formula:

$$P = \min \left[ sl_0^2 \times \left( key - k \right)_0, MR_0 \right]$$
Formula (3).

Model algorithms of other leaf nodes (which may include a node 3-2, a node 3-3, a node 3-4, a node 3-5, and a node 3-6) are similar, and details are not described herein. In addition, for model algorithms corresponding to the internal node and the root node, refer to the corresponding descriptions in FIG. 1. Details are not described herein again.

In this way, when user data needs to be accessed (it is assumed that a key of the user data is key1), a process of accessing the user data may include the following.

First, a location of a next-layer node corresponding to the user data is determined according to a model algorithm of a root node. Specifically, as shown in FIG. 6, key1 is substituted into the model algorithm of the root node, and it is determined that the next-layer node corresponding to the user data is a node 2-2.

Then, a location of the next-layer node corresponding to the user data is determined according to a model algorithm of the node 2-2, and so on, until a leaf node corresponding to the user data is determined. Specifically, as shown in FIG. 6, key1 is substituted into the model algorithm of the node 2-2, and it is determined that the next-layer node corresponding to the user data is a leaf node 3-3.

Then, a location of the next-layer node corresponding to the user data is determined according to a model algorithm of the node 3-3. Specifically, key1 may be substituted into Formula (3), to determine the storage location of the storage unit corresponding to the user data.

Then, if the storage unit corresponding to the user data corresponds to a plurality of pieces of user data, a collision array is accessed through a pointer in the storage unit, to search for user data in the collision array; or if the storage unit corresponding to the user data corresponds to one piece of user data, the user data stored in the storage unit is directly read to complete access.

The following describes an internal structure of the storage unit in this embodiment of this application.

In an implementation, the storage unit in this embodiment of this application includes a first field. The first field indicates whether the storage unit stores user data.

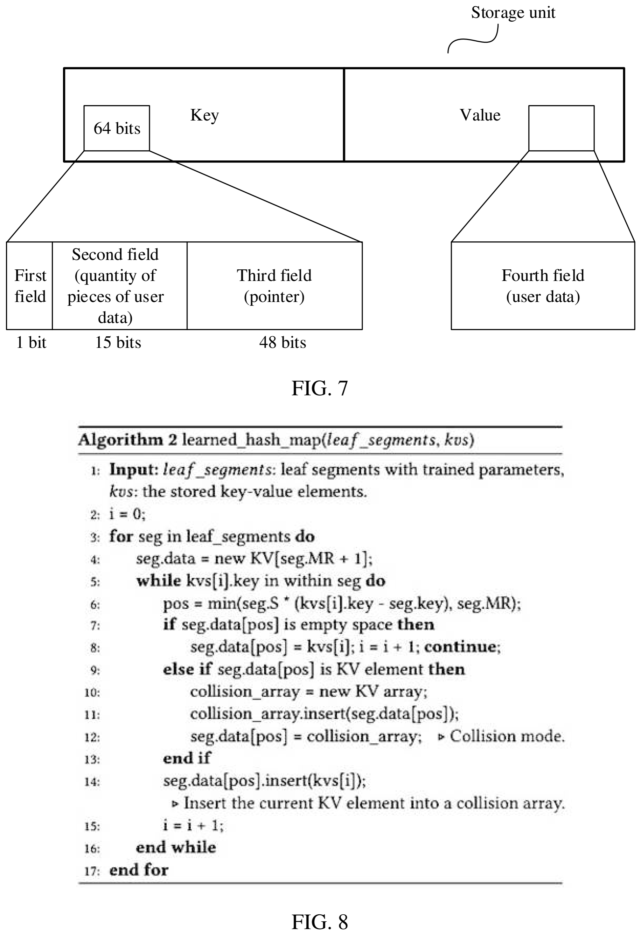

For example, FIG. 7 is a diagram of a structure of a storage unit according to an embodiment of this application. A key of the storage unit includes a first field occupying 1 bit. For example, when the first field is 1, it indicates that the storage unit stores user data. When the first field is 0, it indicates that the storage unit stores no user data. In this case, it needs to be further determined whether the storage unit stores a pointer pointing to a collision array or the storage unit is in an idle state (which may also be understood as that there is a null pointer in the storage unit).

In this way, whether the storage unit stores the user data may be learned through reading of the first field. In this case, when it is determined that the storage unit stores the user data, the user data in the storage unit is directly read.

In addition, in an implementation, the storage unit in this embodiment of this application further includes a second field. The second field indicates a quantity of pieces of user data corresponding to the storage unit.

For example, as shown in FIG. 7, the key of the storage unit includes a second field occupying 15 bits. For example, when the storage unit is in an idle state, the second field is 0 (indicating that no user data corresponds to the storage unit). For another example, when the storage unit corresponds to a plurality of pieces of user data, the second field indicates the quantity of pieces of user data.

According to the foregoing implementations provided in this embodiment of this application, cache (cache) utilization can be improved. For example, when a location is empty or there is only one piece of user data, prefetching based on cache locality may also be performed in advance, to avoid non-contiguous memory access.

In addition, in an implementation, in this embodiment of this application, the storage unit further includes a third field. The third field is used to store a pointer pointing to a collision array.

For example, as shown in FIG. 7, the key of the storage unit includes a third field occupying 48 bits.

In addition, in this embodiment of this application, it is considered that a commonly used operating system is currently a 68-bit operating system, and a pointer in the 64-bit operating system requires only 48-bit storage space. Therefore, in a manner in which the first field and the second field jointly occupy 16 bits (for example, in FIG. 7, the first field occupies 1 bit, and the second field occupies 15 bits), the first field, the second field, and the third field jointly occupy 64 bits, so that storage overheads can be reduced, and cache utilization of a CPU can be improved.

Therefore, in an implementation, in this embodiment of this application, the first field, the second field, and the third field jointly occupy 64 bits.

In addition, in an implementation, in this embodiment of this application, the storage unit further includes a fourth field. The fourth field is used to store user data. For example, as shown in FIG. 7, a value of the storage unit includes a fourth field.

For example, FIG. 8 shows a construction algorithm of a leaf node according to an embodiment of this application. First, each node is initialized and corresponding memory space is allocated to each node. Then, a specific location of a storage unit is calculated based on a model in the node. If the storage unit is empty, a key-value is directly inserted and a next key-value starts to be processed. If user data already exists at a current location, the location is marked as a collision. Then, a location of the user data in a collision array is found (through binary search), and an insertion operation is performed.

In the foregoing descriptions, the technical solution provided in this embodiment of this application is mainly described from a perspective of the structure of the learned index model and the structure of the storage unit that are provided in this embodiment of this application. The following describes the technical solution provided in this embodiment of this application from a perspective of a read/write process of user data.

Specifically, this embodiment of this application may be applied to various storage systems that perform data index management by using the learned index model. Specifically, this embodiment of this application may be applied to data processing units (data processing units, DPUs) of various storage systems that perform data index management by using the learned index model. For example, a storage system to which this embodiment of this application is applied may be a centralized storage system, a distributed storage system, or the like. The storage system to which this embodiment of this application is applied may include one or more independent storage servers, and the storage servers may communicate with each other. Each storage server may separately include hardware components such as a processor, a memory, a network adapter, and a hard disk. The processor and the memory are configured to provide a computing resource. The processor is configured to process a data access request from an outside of the storage server. The memory is an internal memory that directly exchanges data with the processor. The memory may read/write data at any time, has a very high speed, and may serve as a temporary data memory of an operating system or another running program. The hard disk is configured to provide a storage resource, for example, store data. The hard disk may be a magnetic disk or another type of storage medium, for example, a solid-state drive or a shingled magnetic recording hard disk. In addition, the storage server may further include a network adapter configured to communicate with an application server, so that the application server accesses data in the storage server in a manner such as remote direct memory access (remote direct memory access, RDMA). A type of the storage system may not be limited in this embodiment of this application. The following specifically describes the technical solution provided in this embodiment of this application from a perspective of a read/write process of user data in the storage system.

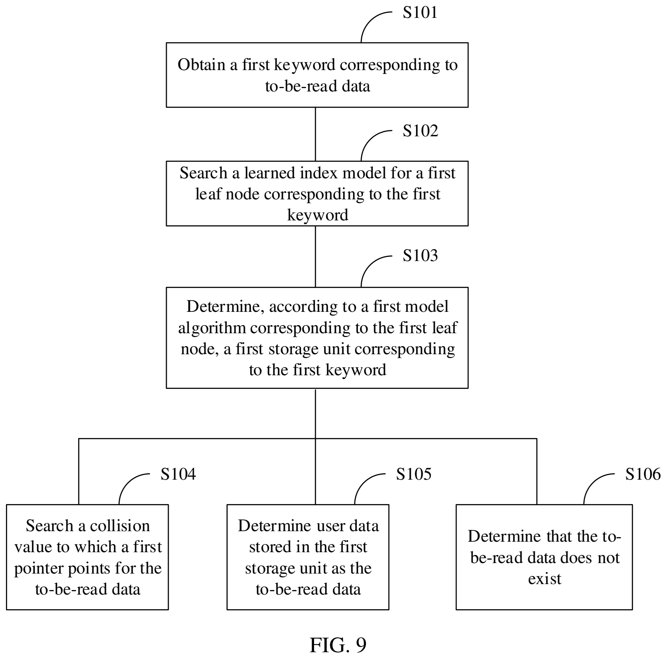

When a read operation is performed on the user data in the storage system by using the technical solution provided in this embodiment of this application, as shown in FIG. 9, the method may include the following steps.

S101: The storage system obtains a keyword corresponding to to-be-read data (for ease of differentiation, the keyword is referred to as a "first keyword" below).

Specifically, for a process in which the storage system obtains the keyword corresponding to the to-be-read data, refer to a related technology. Details are not described herein.

S102: The storage system searches a learned index model for a leaf node corresponding to the first keyword (for ease of differentiation, the leaf node is referred to as a "first leaf node" below).

For a process in which the storage system searches the learned index model for the leaf node corresponding to the first keyword, refer to a process of searching for the leaf node in FIG. 1, FIG. 5, or FIG. 6.

S103: The storage system determines, according to a model algorithm (for ease of differentiation, the model algorithm is referred to as a "first model algorithm" below) corresponding to the first leaf node, a storage unit (for ease of differentiation, the storage unit is referred to as a "first storage unit" below) corresponding to the first keyword.

Refer to the storage unit in FIG. 5 or FIG. 6. The first storage unit may correspond to one or more pieces of user data. When the first storage unit corresponds to a plurality of pieces of user data, the first storage unit stores a first pointer pointing to a collision array. When the first storage unit corresponds to one piece of user data, the first storage unit stores the user data.

In two different cases, that is, "the first storage unit corresponds to a plurality of pieces of user data" and "the first storage unit corresponds to one piece of user data", a process of reading the to-be-read data after the first storage unit is determined is described below.

In a first case, the method further includes the following step.

S104: The storage system searches the collision value to which the first pointer points for the to-be-read data.

In a possible design, a structure of the learned index model used by the storage system may be the structure of the learned index model provided in FIG. 5 or FIG. 6. In addition, a structure of the first storage unit may be shown in FIG. 7, and may include some or all of the first field, the second field, the third field, and the fourth field.

When the first storage unit includes the first field and the second field, S104 may include the following step.

S104a: When it is determined, based on the first field, that the first storage unit stores no user data, and it is determined, based on the second field, that the first storage unit corresponds to a plurality of pieces of user data, search the collision value to which the first pointer points for the to-be-read data.

In addition, in a possible design, in a process of searching the collision value to which the first pointer points for the to-be-read data, a manner of binary search may be used to search the collision value to which the first pointer points for the to-be-read data.

In a second case, the method further includes the following step.

S105: Determine the user data stored in the first storage unit as the to-be-read data.

In a possible design, if the first storage unit includes the first field, S105 may include the following step.

S105a: When it is determined, based on the first field, that the first storage unit stores user data, determine the user data stored in the first storage unit as the to-be-read data.

After the to-be-read data is obtained through S104 or S105, the to-be-read data may be fed back to an application side, to complete data access.

In addition, in an implementation, considering that there may be no to-be-read data, when the first storage unit includes the first field and the second field, the method may further include the following step.

S106: When determining, based on the first field, that the first storage unit stores no user data, and determining, based on the second field, that the quantity of pieces of user data corresponding to the first storage unit is zero, the storage system determines that the to-be-read data does not exist.

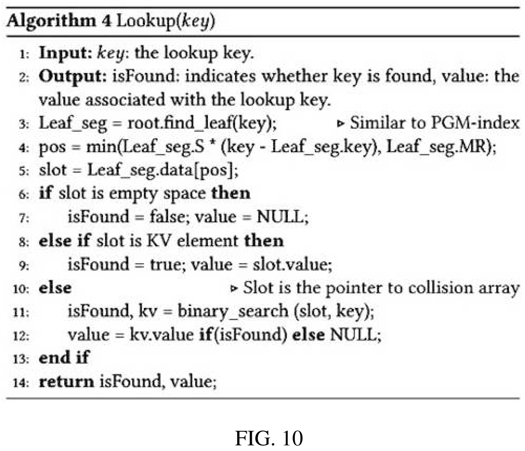

For example, FIG. 10 shows a specific implementation procedure of a data reading process according to an embodiment of this application. After a key-value is given (that is, a keyword (key) of the user data is given), a model of an upper-layer node may be repeatedly used for prediction starting from a root node of the learned index model, and a location of a lower-layer node corresponding to a current key-value pair is found until the leaf node is reached. Prediction of an intermediate node is not always accurate, but can be controlled within an error range by using our method. Therefore, after each prediction, we use a linear search method to further search within the error range to obtain a final accurate location. At the leaf node, the model is used to obtain a location of a current key (a $4^{th}$ line) and find a corresponding slot (a $5^{th}$ line). If the slot is empty, currently queried data does not exist, and the learned index model returns a message indicating that data is not found (a $7^{th}$ line). Otherwise, the most significant bit can be used to distinguish whether the slot is a key-value element or a collision array. If the slot is a key-value element, the learned index model may directly return a value (a $9^{th}$ line). If the slot is a collision array, the learned index model additionally performs memory access through a stored pointer and performs binary search to locate the key-value element ($11^{th}$ and $12^{th}$ lines). To handle range queries, the learned index model first performs a point query to find an iterator of a lower bound key, and then extracts data starting from a current location until an end of a specified length. Different from a B+-tree and an ALEX index model, this embodiment of this application does not require storage of double pointers in each leaf segment because the leaf segment has an ordered and continuous layout. If a scan length exceeds a quantity of key-value elements in a leaf segment, an iterator of a minimum index can immediately proceed to a first element of a next leaf segment.

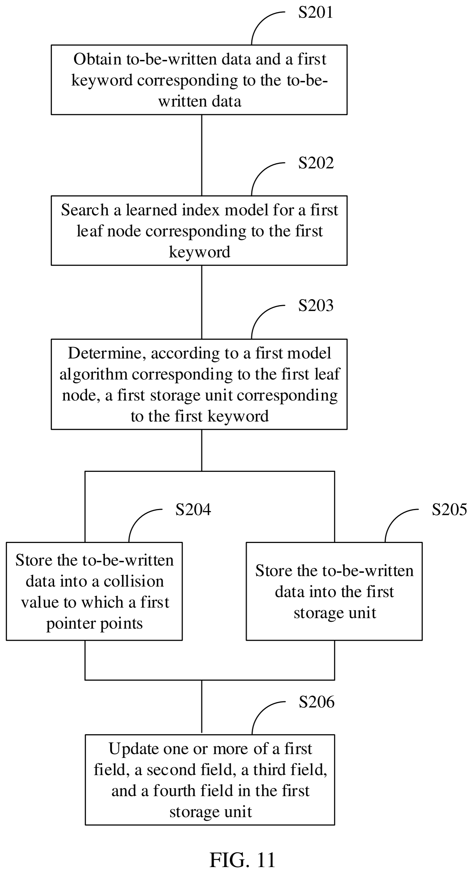

When the user data is written into the storage system by using the technical solution provided in this embodiment of this application, as shown in FIG. 11, the method may include the following steps.

S201: The storage system obtains to-be-written data and a first keyword corresponding to the to-be-written data.

S202: The storage system searches a learned index model for a first leaf node corresponding to the first keyword.

For a process in which the storage system searches the learned index model for the leaf node corresponding to the first keyword, refer to a process of searching for the leaf node in FIG. 1, FIG. 5, or FIG. 6.

S203: The storage system determines, according to a first model algorithm corresponding to the first leaf node, a first storage unit corresponding to the first keyword.

Refer to the storage unit in FIG. 5 or FIG. 6. The first storage unit may correspond to one or more pieces of user data, or the first storage unit may be in an idle state. When the first storage unit corresponds to a plurality of pieces of user data, the first storage unit stores a first pointer pointing to a collision array. When the first storage unit corresponds to one piece of user data, the first storage unit stores the user data.

In two cases, a process of writing the to-be-written data after the first storage unit is determined is described below.

S204: The storage system stores the to-be-written data into a collision value to which the first pointer points.

In a possible design, a structure of the learned index model used by the storage system may be the structure of the learned index model provided in FIG. 5 or FIG. 6. In addition, a structure of the first storage unit may be shown in FIG. 7, and may include some or all of the first field, the second field, the third field, and the fourth field.

When the first storage unit includes the first field, S204 may include the following step.

S204a: When determining, based on the first field, that the first storage unit stores user data, the storage system stores the to-be-written data and the user data stored in the first storage unit together into the collision value to which the first pointer points.

Alternatively, when the first storage unit includes the first field and the second field, S204 may further include the following step.

S204b: When determining, based on the first field, that the first storage unit stores no user data, and determining, based on the second field, that the first storage unit corresponds to a plurality of pieces of user data, the storage system stores the to-be-written data into the collision value to which the first pointer points.

In addition, in a possible design, the method may further include: The storage system determines, through binary search, a storage location of the to-be-written data in the collision value to which the first pointer points.

In a second case, the method further includes the following step.

S205: The storage system stores the to-be-written data into the first storage unit.

In a possible design, when the first storage unit includes the first field and the second field, S205 may further include the following step.

S205a: When determining, based on the first field, that the first storage unit stores no user data, and determining, based on the second field, that the quantity of pieces of user data corresponding to the first storage unit is zero, the storage system stores the to-be-written data into the first storage unit.

In addition, in an implementation, the method may further include the following step.

S206: After storing the to-be-written data into the collision value to which the first pointer points, or after storing the to-be-written data into the first storage unit, the storage system updates one or more of the first field, the second field, the third field, and the fourth field in the first storage unit.

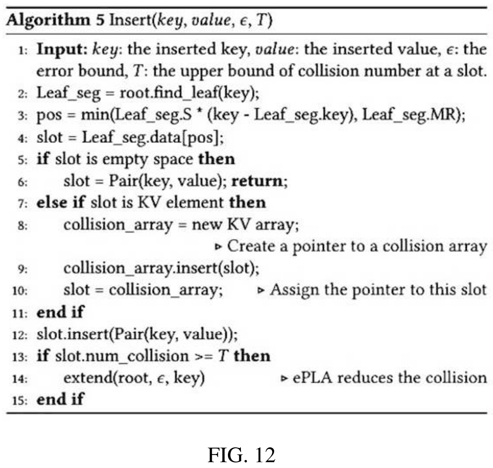

For example, FIG. 12 shows a specific implementation procedure of a data writing process according to an embodiment of this application. Similar to the specific implementation procedure of the data reading process provided in FIG. 10, in the procedure shown in FIG. 12, a leaf node also needs to be found through root node recursion, and prediction is performed by using a model in the leaf node. If a predicted location is empty, the to-be-written data may be directly written into a corresponding location. If the location already has a key-value, or is already a collision array, a pointer needs to be parsed to obtain a memory address of a collision element. An accurate insertion location is obtained through binary search, and a write operation is performed on the to-be-written data.

In addition, for the learned index model provided above in this embodiment of this application, an embodiment of this application further provides a model update method. In this method, a structure of the learned index model can be locally adjusted, to support dynamic data insertion and reduce training costs.

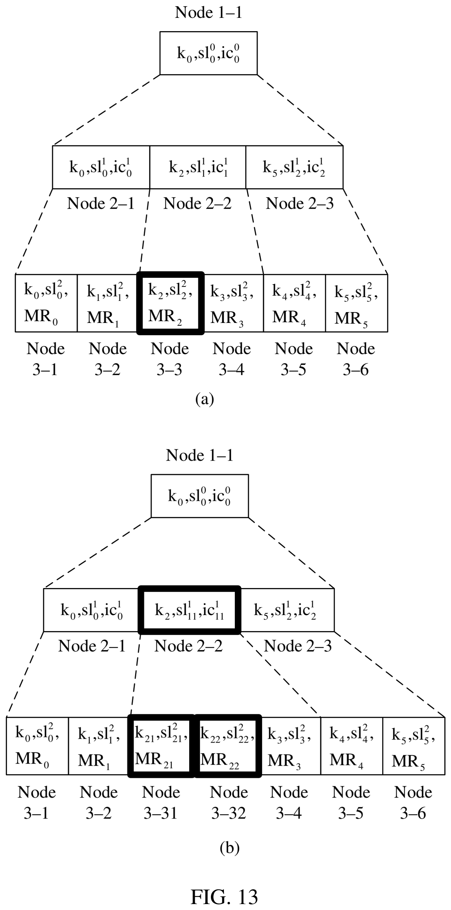

For example, (a) of FIG. 13 shows a learned index model according to an embodiment of this application. When user data in a collision array in a storage unit included in a leaf node 3-3 of the learned index model reaches a quantity threshold (that is, in this case, too much user data is stored in the collision array of the storage unit, which affects data reading and writing, and therefore a model algorithm in the learned index model needs to be adjusted), the model update method provided in this embodiment of this application may include the following steps.

First, a model algorithm of the leaf node 3-3 is updated. Specifically, the model algorithm of the leaf node 3-3 may be updated to one or more model algorithms corresponding to one or more leaf nodes. According to an updated model algorithm of the leaf node, the user data in the collision array can be prevented from reaching the quantity threshold.

For example, in (b) of FIG. 13, an example in which the model algorithm of the leaf node 3-3 is updated to model algorithms of two leaf nodes (that is, a leaf node 3-31 and a node 3-32) is used for description. According to the model algorithms of the leaf node 3-31 and the node 3-32, the user data in the collision array can be prevented from reaching the quantity threshold.

After the model algorithm of the leaf node is updated, other affected nodes are updated in a direction from a child node to a parent node. For example, in (b) of FIG. 13, after the model algorithm of the leaf node 3-3 is updated to the model algorithms of the leaf node 3-31 and the node 3-32, a model algorithm of a node 2-2 may be affected. Therefore, the model algorithm of the node 2-2 is updated.

By using the foregoing manner, when only model algorithms of some nodes in the index model are updated, it can be ensured that the quantity of pieces of user data in the collision array corresponding to the storage unit does not keep increasing, thereby improving read/write efficiency. However, a conventional PLA model has strong dependency on intercepts of different linear models. Therefore, inserting one piece of user data requires significant overheads to move the data and retrain the model. Otherwise, it cannot be ensured that an original model may not be applied to new user data. Although an original PGM-index can evenly distribute overheads of retraining the model in an LSM-tree manner, this manner causes a long delay to a query operation.

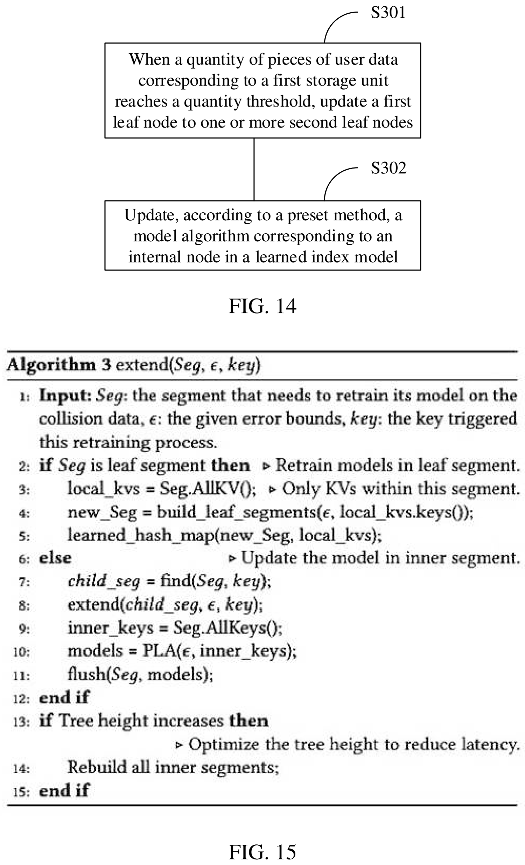

With reference to an instance, the following describes a procedure of the model update method provided in this embodiment of this application. As shown in FIG. 14, the method may include the following steps.

S301: When a quantity of pieces of user data corresponding to a first storage unit reaches a quantity threshold, a storage system updates a first leaf node to one or more second leaf nodes.

In a model algorithm corresponding to the one or more second leaf nodes, a quantity of pieces of user data corresponding to each storage unit is less than the quantity threshold.

Specifically, in an actual application process, the storage system may determine, in a process of writing data (for example, in the procedure shown in FIG. 11), whether the quantity of pieces of user data corresponding to the first storage unit into which the data is written reaches the quantity threshold. After it is determined that the quantity of pieces of user data corresponding to the first storage unit reaches the quantity threshold, S301 is triggered to be performed. In addition, the storage system may also detect, in a periodic detection manner, whether the quantity of pieces of user data corresponding to each storage unit reaches the quantity threshold. After it is determined that the quantity of pieces of user data corresponding to the first storage unit reaches the quantity threshold, S301 is triggered to be performed.

The first storage unit may include one or more storage units. In other words, in an actual application process, the storage system may trigger execution of S301 after detecting that a quantity of pieces of user data corresponding to one storage unit reaches the quantity threshold. Alternatively, the storage system may not immediately trigger execution of S301 after detecting that a quantity of pieces of user data corresponding to one storage unit reaches the quantity threshold, but trigger execution of S301 after a quantity of storage units that meet a requirement (that is, a quantity of pieces of user data reaches the quantity threshold) reaches a specific quantity.

S302: The storage system updates, according to a preset method, a model algorithm corresponding to an internal node in the learned index model.

The preset method includes: in the learned index model, sequentially determining, in a direction from a child node to a parent node after a child node is updated, whether a model algorithm of a parent node of the child node is affected; and if the model algorithm of the parent node is affected, updating the model algorithm of the parent node until the model algorithm of the internal node in the learned index model is updated.

For example, FIG. 15 shows a specific implementation procedure of a model update method according to an embodiment of this application. A general logic of the implementation procedure is as follows: When a quantity of pieces of collision data in a leaf node reaches an upper limit, local adjustment is started, and a corresponding parent node is updated.

In addition, an embodiment further provides a data processing apparatus. The data processing apparatus can be configured to perform some or all steps performed by the storage system in the foregoing method procedures in embodiments.

It may be understood that, to implement functions of the storage system in the foregoing method procedures, the data processing apparatus includes a corresponding hardware structure and/or software module for performing the functions. A person skill in the art should be easily aware that, in combination with the units and method steps in the examples described in embodiments, the technical solutions provided in embodiments can be implemented by hardware or a combination of hardware and computer software. Whether a function is performed by using hardware or hardware driven by computer software depends on particular application scenarios and design constraints of the technical solutions.

In embodiments, the data processing apparatus may run in a hardware device that is in a storage system and that is configured to manage data storage. For example, the data processing apparatus may run in a controller in a centralized storage system or some hardware in the controller. For another example, the data processing apparatus may run in a storage server that manages a data read/write function in a distributed storage system or some hardware in the storage server.

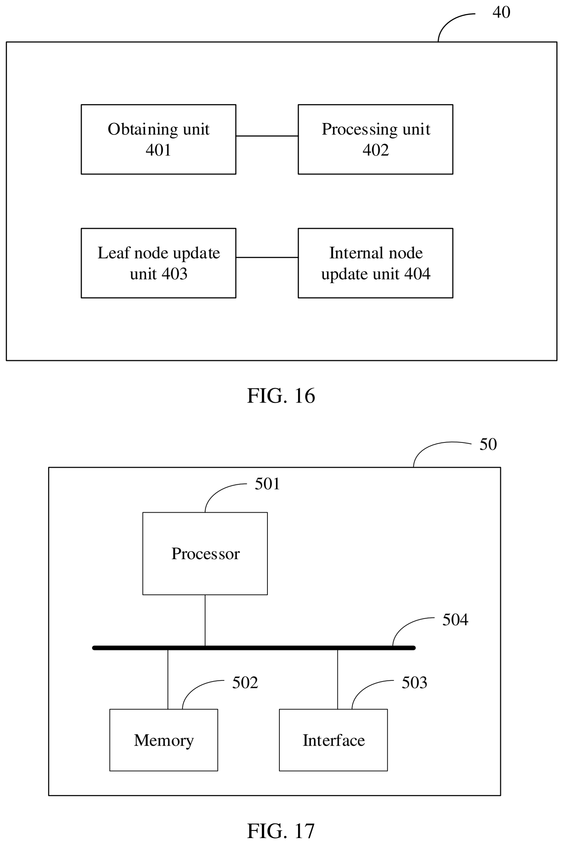

FIG. 16 is a diagram of a structure of a data processing apparatus according to an embodiment. The data processing apparatus 40 includes one or more of an obtaining unit 401, a processing unit 402, a leaf node update unit 403, and an internal node update unit 404. The data processing apparatus 40 may be configured to implement functions of some or all steps in the method in FIG. 8 to FIG. 15.

For example, the obtaining unit 401 is configured to perform one or more of S101 in FIG. 9 and S201 in FIG. 11.

The processing unit 402 is configured to perform one or more of S102 to S106 in FIG. 9 and S202 to S206 in FIG. 11.

The leaf node update unit 403 is configured to perform S301 in FIG. 14.

The internal node update unit 404 is configured to perform S302 in FIG. 14.

For more detailed descriptions of the obtaining unit 401, the processing unit 402, the leaf node update unit 403, and the internal node update unit 404, refer to related descriptions in the procedures shown in FIG. 8 to FIG. 15. Details are not described herein again.

FIG. 17 is diagram of another structure of a data processing apparatus according to this application. The data processing apparatus 50 may be a chip or a system on a chip. The data processing apparatus 50 may be configured to implement functions of some or all steps in the procedures described in FIG. 8 to FIG. 15. The data processing apparatus 50 includes the following.

The processor 501 is configured to perform some or all of the steps in the procedures described in FIG. 8 to FIG. 15 in embodiments of this application.

Specifically, the processor 501 may include a general-purpose central processing unit (central processing unit, CPU) and a memory, or the processor 501 may be a microprocessor, a field programmable logic gate array (Field Programmable Gate Array, FPGA), an application-specific integrated circuit (application-specific integrated circuit, ASIC), or the like. In a scenario in which the processor 501 includes a CPU and a memory, the CPU executes computer instructions stored in the memory, to perform the data processing method provided in this application.

In addition, the data processing apparatus 50 may further include a memory 502. The memory 502 stores computer instructions, and the processor 501 executes the computer instructions stored in the memory, to perform some or all of the steps in the procedures described in FIG. 8 to FIG. 15.

Specifically, the memory 502 may be a read-only memory (read-only memory, ROM) or another type of static storage device capable of storing static information and instructions, or a random access memory (random access memory, RAM) or another type of dynamic storage device capable of storing information and instructions; or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium capable of carrying or storing program code in a form of instructions or a data structure and capable of being accessed by a computer, but is not limited thereto.

In addition, the data processing apparatus 50 may further include an interface 503. The interface 503 may be configured to receive and send data. The interface 503 may be a communication interface, a transceiver, or the like.

In addition, the data processing apparatus 50 may further include a communication line 504. For example, the communication line 504 may be a data bus, and is configured to transmit information between the foregoing components.

For more detailed descriptions of the data processing apparatus 50, directly refer to related descriptions in the procedures in FIG. 8 to FIG. 15. Details are not described herein again.

The method steps in embodiments of this application may be implemented by hardware, or may be implemented by the processor executing software instructions. The software instructions may include a corresponding software module. The software module may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer programs or instructions. When the computer programs or the instructions are loaded and executed on a computer, the procedures or functions in embodiments of this application are completely or partially performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc (digital video disc, DVD); or may be a semiconductor medium, for example, an SSD.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, "a plurality of" means two or more, and other quantifiers are similar to the foregoing case. The term "and/or" describes an association relationship between associated objects and indicates that three relationships may exist. For example, A and/or B may indicate the following three cases: Only A exists, both A and B exist, and only B exists. In addition, an element (element) appearing in a singular form with "a", "an", or "the" does not mean "one or only one" unless otherwise specified in the context, but means "one or more than one". For example, "a device" means for one or more such devices. Furthermore, "at least one of (at least one of) ..." means one or any combination of subsequent associated objects. For example, "at least one of A, B, and C" includes A, B, C, AB, AC, BC, or ABC. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A data reading method, comprising:

    obtaining a first keyword corresponding to to-be-read data;
    searching a learned index model for a first leaf node corresponding to the first keyword;
    determining, according to a first model algorithm corresponding to the first leaf node, a first storage unit corresponding to the first keyword, wherein the first storage unit corresponds to one or more pieces of user data, wherein when the first storage unit corresponds to a plurality of pieces of user data, the first storage unit stores a first pointer pointing to a collision array, or when the first storage unit corresponds to one piece of user data, the first storage unit stores the user data; and
    searching the collision value to which the first pointer points for the to-be-read data, or determining the user data stored in the first storage unit as the to-be-read data.

2.  The method according to claim 1, wherein the first storage unit comprises a first field, and the first field indicates whether the first storage unit stores user data.

3.  The method according to claim 2, wherein when the first field indicates that the first storage unit stores no user data, the first storage unit further comprises a second field, and the second field indicates a quantity of pieces of user data corresponding to the first storage unit.

4. The method according to claim 3, wherein searching the collision value to which the first pointer points for the to-be-read data comprises:
when it is determined, based on the first field, that the first storage unit stores no user data, and it is determined, based on the second field, that the first storage unit corresponds to a plurality of pieces of user data, searching the collision value to which the first pointer points for the to-be-read data.

5. The method according to claim 3 or 4, wherein the method further comprises:
when it is determined, based on the first field, that the first storage unit stores no user data, and it is determined, based on the second field, that the quantity of pieces of user data corresponding to the first storage unit is zero, determining that the to-be-read data does not exist.

6. The method according to any one of claims 2 to 5, wherein determining the user data stored in the first storage unit as the to-be-read data comprises:
when it is determined, based on the first field, that the first storage unit stores user data, determining the user data stored in the first storage unit as the to-be-read data.

7. The method according to any one of claims 1 to 6, wherein a model algorithm of a leaf node in the learned index model satisfies Formula 1:

$$P = \min\left[ S \times (key - K), MR \right] \qquad \text{Formula 1,}$$

wherein
key represents a keyword of user data, P represents a storage location of a storage unit corresponding to the user data, and S, K, and MR are parameters of the model algorithm of the leaf node.

8. The method according to any one of claims 1 to 7, wherein searching the collision value to which the first pointer points for the to-be-read data comprises:
searching, through binary search, the collision value to which the first pointer points for the to-be-read data.

9. The method according to any one of claims 1 to 8, wherein when the first storage unit corresponds to a plurality of pieces of user data, the first storage unit comprises a third field, and the third field is used to store the first pointer; or
when the first storage unit corresponds to one piece of user data, the first storage unit comprises a fourth field, and the fourth field is used to store the user data.

10. A data storage method, comprising:

obtaining to-be-written data and a first keyword corresponding to the to-be-written data;
searching a learned index model for a first leaf node corresponding to the first keyword;
determining, according to a first model algorithm corresponding to the first leaf node, a first storage unit corresponding to the first keyword, wherein the first storage unit corresponds to one or more pieces of user data, wherein when the first storage unit corresponds to a plurality of pieces of user data, the first storage unit stores a first pointer pointing to a collision array, or when the first storage unit corresponds to one piece of user data, the first storage unit stores the user data; and
storing the to-be-written data into a collision value to which the first pointer points, or storing the to-be-written data into the first storage unit.

11. The method according to claim 10, wherein the first storage unit comprises a first field, and the first field indicates whether the first storage unit stores user data.

12. The method according to claim 11, wherein when the first field indicates that the first storage unit stores no user data, the first storage unit further comprises a second field, and the second field indicates a quantity of pieces of user data corresponding to the first storage unit.

13. The method according to claim 12, wherein storing the to-be-written data into the first storage unit comprises:
when it is determined, based on the first field, that the first storage unit stores no user data, and it is determined, based on the second field, that the quantity of pieces of user data corresponding to the first storage unit is zero, storing the to-be-written data into the first storage unit.

14. The method according to claim 12 or 13, wherein storing the to-be-written data into the collision value to which the first pointer points comprises:

when it is determined, based on the first field, that the first storage unit stores user data, storing the to-be-written data and the user data stored in the first storage unit together into the collision value to which the first pointer points; or

storing the to-be-written data into the collision value to which the first pointer points comprises:

when it is determined, based on the first field, that the first storage unit stores no user data, and it is determined, based on the second field, that the first storage unit corresponds to a plurality of pieces of user data, storing the to-be-written data into the collision value to which the first pointer points.

15. The method according to any one of claims 12 to 14, wherein the method further comprises:

after the to-be-written data is stored into the collision value to which the first pointer points, or after the to-be-written data is stored into the first storage unit, updating the first field and the second field.

16. The method according to any one of claims 10 to 15, wherein a model algorithm of a leaf node in the learned index model satisfies Formula 1:

$$P = \min \left[ S \times \left( \text{key} - K \right), \, MR \right] \qquad \text{Formula 1,}$$

wherein

key represents a keyword of user data, P represents a storage location of a storage unit corresponding to the user data, and S, K, and MR are parameters of the model algorithm of the leaf node.

17. The method according to any one of claims 10 to 16, wherein the method further comprises:

determining, through binary search, a storage location of the to-be-written data in the collision value to which the first pointer points.

18. The method according to any one of claims 10 to 17, wherein when the first storage unit corresponds to a plurality of pieces of user data, the first storage unit comprises a third field, and the third field is used to store the first pointer; or when the first storage unit corresponds to one piece of user data, the first storage unit comprises a fourth field, and the fourth field is used to store the user data.

19. The method according to any one of claims 10 to 17, wherein the method further comprises:

when a quantity of pieces of user data corresponding to the first storage unit reaches a quantity threshold, updating the first leaf node to one or more second leaf nodes, wherein in a model algorithm corresponding to the one or more second leaf nodes, a quantity of pieces of user data corresponding to each storage unit is less than the quantity threshold; and

updating, according to a preset method, a model algorithm corresponding to an internal node in the learned index model, wherein the preset method comprises: in the learned index model, sequentially determining, in a direction from a child node to a parent node after a child node is updated, whether a model algorithm of a parent node of the child node is affected; and if the model algorithm of the parent node is affected, updating the model algorithm of the parent node until the model algorithm of the internal node in the learned index model is updated.

20. A model update method, wherein the method is applied to a learned index model, and the learned index model comprises an internal node and a leaf node, wherein the internal node is configured to search for, based on a keyword of user data, a leaf node corresponding to the user data, the leaf node is configured to search for, based on a keyword of user data, a storage unit corresponding to the user data, and the storage unit corresponds to one or more pieces of user data, wherein when the storage unit corresponds to a plurality of pieces of user data, the storage unit stores a first pointer pointing to a collision array, or when the storage unit corresponds to one piece of user data, the storage unit stores the user data; and the method comprises:

when a quantity of pieces of user data corresponding to a first storage unit reaches a quantity threshold, updating the first leaf node to one or more second leaf nodes, wherein the first storage unit is any storage unit in the learned index model, the first leaf node is a leaf node corresponding to the first storage unit in the learned index model, and in a model algorithm corresponding to the one or more second leaf nodes, a quantity of pieces of user data corresponding to each storage unit is less than the quantity threshold; and

updating, according to a preset method, a model algorithm corresponding to an internal node in the learned index model, wherein the preset method comprises: in the learned index model, sequentially determining, in a direction from a child node to a parent node after a child node is updated, whether a model algorithm of a parent node of the child node is affected; and if the model algorithm of the parent node is affected, updating the model algorithm of the parent node until the model algorithm of the internal node in the learned index model is updated.

21. A data processing apparatus, comprising:

an obtaining unit, configured to obtain a first keyword corresponding to to-be-read data; and
a processing unit, configured to search a learned index model for a first leaf node corresponding to the first keyword, wherein
the processing unit is further configured to determine, according to a first model algorithm corresponding to the first leaf node, a first storage unit corresponding to the first keyword, wherein the first storage unit corresponds to one or more pieces of user data, wherein when the first storage unit corresponds to a plurality of pieces of user data, the first storage unit stores a first pointer pointing to a collision array, or when the first storage unit corresponds to one piece of user data, the first storage unit stores the user data; and
the processing unit is further configured to: search the collision value to which the first pointer points for the to-be-read data, or determine the user data stored in the first storage unit as the to-be-read data.

22. A data processing apparatus, comprising:

an obtaining unit, configured to obtain to-be-written data and a first keyword corresponding to the to-be-written data; and
a processing unit, configured to search a learned index model for a first leaf node corresponding to the first keyword, wherein
the processing unit is further configured to determine, according to a first model algorithm corresponding to the first leaf node, a first storage unit corresponding to the first keyword, wherein the first storage unit corresponds to one or more pieces of user data, wherein when the first storage unit corresponds to a plurality of pieces of user data, the first storage unit stores a first pointer pointing to a collision array, or when the first storage unit corresponds to one piece of user data, the first storage unit stores the user data; and
the processing unit is further configured to: store the to-be-written data into a collision value to which the first pointer points, or store the to-be-written data into the first storage unit.

23. A data processing apparatus, wherein the data processing apparatus is used in a learned index model, and the learned index model comprises an internal node and a leaf node, wherein the internal node is configured to search for, based on a keyword of user data, a leaf node corresponding to the user data, the leaf node is configured to search for, based on a keyword of user data, a storage unit corresponding to the user data, and the storage unit corresponds to one or more pieces of user data, wherein when the storage unit corresponds to a plurality of pieces of user data, the storage unit stores a first pointer pointing to a collision array, or when the storage unit corresponds to one piece of user data, the storage unit stores the user data; and the data processing apparatus comprises:

a leaf node update unit, configured to: when a quantity of pieces of user data corresponding to a first storage unit reaches a quantity threshold, update the first leaf node to one or more second leaf nodes, wherein the first storage unit is any storage unit in the learned index model, the first leaf node is a leaf node corresponding to the first storage unit in the learned index model, and in a model algorithm corresponding to the one or more second leaf nodes, a quantity of pieces of user data corresponding to each storage unit is less than the quantity threshold; and
an internal node update unit, configured to update, according to a preset method, a model algorithm corresponding to an internal node in the learned index model, wherein the preset method comprises: in the learned index model, sequentially determining, in a direction from a child node to a parent node after a child node is updated, whether a model algorithm of a parent node of the child node is affected; and if the model algorithm of the parent node is affected, updating the model algorithm of the parent node until the model algorithm of the internal node in the learned index model is updated.

24. A data processing apparatus, comprising a memory and a processor, wherein the memory is configured to store computer instructions, and the processor is configured to invoke the computer instructions from the memory and run the computer instructions, to implement the method according to any one of claims 1 to 9, or implement the method according to any one of claims 10 to 19, or implement the method according to claim 20.

25. A storage system, comprising one or more storage servers, wherein the one or more storage servers are configured to store data, and all or some of the one or more storage servers are configured to perform the method according to any one of claims 1 to 9, or all or some of the one or more storage servers are configured to perform the method according to any one of claims 10 to 19, or all or some of the one or more storage servers are configured to perform the method according to claim 20.

26. A chip, comprising a memory and a processor, wherein the memory is configured to store computer instructions, and the processor is configured to invoke the computer instructions from the memory and run the computer instructions, to implement the method according to any one of claims 1 to 9, or implement the method according to any one of claims 10 to 19, or implement the method according to claim 20.

27. A computer-readable storage medium, wherein the computer-readable storage medium stores instructions, and when the instructions are run on a processor, the method according to any one of claims 1 to 9, or the method according to any one of claims 10 to 19, or the method according to claim 20 is implemented.

28. A computer program product, wherein the computer program product comprises instructions, and when the instructions are run on a processor, the method according to any one of claims 1 to 9, or the method according to any one of claims 10 to 19, or the method according to claim 20 is implemented.

FIG. 1

First layer: $2, sl_0^0, ic_0^0$

Second layer: $2, sl_0^1, ic_0^1$ | $31, sl_1^1, ic_1^1$ | $102, sl_2^1, ic_2^1$ | $187, sl_3^1, ic_3^1$

Third layer: $2, sl_0^2, ic_0^2$ | $23, sl_1^2, ic_1^2$ | $31, sl_2^2, ic_2^2$ | $48, sl_3^2, ic_3^2$ | $71, sl_4^2, ic_4^2$ | $102, sl_5^2, ic_5^2$ | $158, sl_6^2, ic_6^2$ | $187, sl_7^2, ic_7^2$

2 | 12 | 15 | 18 | 23 | 24 | 29 | 31 | 34 | 36 | 38 | 48 | 55 | 59 | 60 | 71 | 73 | 74 | 76 | 88 | 95 | 102 | 115 | 122 | 123 | 124 | 158 | 159 | 161 | 164 | 165 | 187 | 189 | 190

First layer     $2,\mathrm{sl}_0^0,\mathrm{ic}_0^0$

Second layer     $2,\mathrm{sl}_0^1,\mathrm{ic}_0^1$ | $31,\mathrm{sl}_1^1,\mathrm{ic}_1^1$ | $102,\mathrm{sl}_2^1,\mathrm{ic}_2^1$ | $187,\mathrm{sl}_3^1,\mathrm{ic}_3^1$

Third layer     $2,\mathrm{sl}_0^2,\mathrm{ic}_0^2$ | $23,\mathrm{sl}_1^2,\mathrm{ic}_1^2$ | $31,\mathrm{sl}_2^2,\mathrm{ic}_2^2$ | $48,\mathrm{sl}_3^2,\mathrm{ic}_3^2$ | $71,\mathrm{sl}_4^2,\mathrm{ic}_4^2$ | $102,\mathrm{sl}_5^2,\mathrm{ic}_5^2$ | $158,\mathrm{sl}_6^2,\mathrm{ic}_6^2$ | $187,\mathrm{sl}_7^2,\mathrm{ic}_7^2$

2 | 12 | 15 | 18 | 23 | 24 | 29 | 31 | 34 | 36 | 38 | 48 | 55 | 59 | 60 | 71 | 73 | 74 | 76 | 88 | 95 | 102 | 115 | 122 | 123 | 124 | 158 | 159 | 161 | 164 | 165 | 187 | 189 | 190

FIG. 2

Keyword

Root node
(root node)

Internal node
(internal node)

Data node
(data node)

Adaptive recursive
model index
(adaptive RMI)

Keyword (key)

Gap

Exponential
search
(exponential
search)

Gapped
array
(gapped
array)

FIG. 3

Node

Data

Null

key

FIG. 4

FIG. 5

Node 1–1

$k_0, sl_0^0, ic_0^0$

First layer

Node 2–1   Node 2–2   Node 2–3

Internal node

$k_0, sl_0^1, ic_0^1$   $k_2, sl_1^1, ic_1^1$   $k_5, sl_2^1, ic_2^1$   Second layer

Node 3–1   Node 3–2   Node 3–3   Node 3–4   Node 3–5   Node 3–6

Leaf node

$k_0, sl_0^2, MR_0$   $k_1, sl_1^2, MR_1$   $k_2, sl_2^2, MR_2$   $k_3, sl_3^2, MR_3$   $k_4, sl_4^2, MR_4$   $k_5, sl_5^2, MR_5$   Third layer

Key-value pair

Collision array

Free space

a b c d e f g h i j k l m n o p

FIG. 6

Storage unit

| | 64 bits | Key | | Value | |

First field | Second field (quantity of pieces of user data) | Third field (pointer) | | Fourth field (user data) |

1 bit        15 bits                48 bits

FIG. 7

---

**Algorithm 2** learned_hash_map(*leaf_segments, kvs*)

1: **Input:** *leaf_segments*: leaf segments with trained parameters, *kvs*: the stored key-value elements.
2: i = 0;
3: **for** seg in leaf_segments **do**
4:     seg.data = new KV[seg.MR + 1];
5:     **while** kvs[i].key in within seg **do**
6:         pos = min(seg.S * (kvs[i].key - seg.key), seg.MR);
7:         **if** seg.data[pos] is empty space **then**
8:             seg.data[pos] = kvs[i]; i = i + 1; **continue**;
9:         **else if** seg.data[pos] is KV element **then**
10:             collision_array = new KV array;
11:             collision_array.insert(seg.data[pos]);
12:             seg.data[pos] = collision_array;   ▷ Collision mode.
13:         **end if**
14:         seg.data[pos].insert(kvs[i]);
                ▷ Insert the current KV element into a collision array.
15:         i = i + 1;
16:     **end while**
17: **end for**

FIG. 8

S101

Obtain a first keyword corresponding to
to-be-read data

S102

Search a learned index model for a first
leaf node corresponding to the first
keyword

S103

Determine, according to a first model
algorithm corresponding to the first leaf
node, a first storage unit corresponding
to the first keyword

S104

Search a collision
value to which a first
pointer points for the
to-be-read data

S105

Determine user data
stored in the first
storage unit as the
to-be-read data

S106

Determine that the to-
be-read data does not
exist

FIG. 9

**Algorithm 4** Lookup(*key*)

---

**Input:** *key*: the lookup key.

**Output:** isFound: indicates whether key is found, value: the value associated with the lookup key.

Leaf_seg = root.find_leaf(key);    ▷ Similar to PGM-index

pos = min(Leaf_seg.S * (key - Leaf_seg.key), Leaf_seg.MR);

slot = Leaf_seg.data[pos];

**if** slot is empty space **then**

    isFound = false; value = NULL;

**else if** slot is KV element **then**

    isFound = true; value = slot.value;

**else**    ▷ Slot is the pointer to collision array

    isFound, kv = binary_search (slot, key);

    value = kv.value **if**(isFound) **else** NULL;

**end if**

**return** isFound, value;

---

FIG. 10

S201

Obtain to-be-written data and a first keyword corresponding to the to-be-written data

S202

Search a learned index model for a first leaf node corresponding to the first keyword

S203

Determine, according to a first model algorithm corresponding to the first leaf node, a first storage unit corresponding to the first keyword

S204

Store the to-be-written data into a collision value to which a first pointer points

S205

Store the to-be-written data into the first storage unit

S206

Update one or more of a first field, a second field, a third field, and a fourth field in the first storage unit

FIG. 11

---

**Algorithm 5** Insert(*key*, *value*, $\epsilon$, *T*)

---

1: **Input:** *key*: the inserted key, *value*: the inserted value, $\epsilon$: the error bound, *T*: the upper bound of collision number at a slot.
2: Leaf_seg = root.find_leaf(key);
3: pos = min(Leaf_seg.S * (key - Leaf_seg.key), Leaf_seg.MR);
4: slot = Leaf_seg.data[pos];
5: **if** slot is empty space **then**
6:     slot = Pair(key, value); **return**;
7: **else if** slot is KV element **then**
8:     collision_array = new KV array;
                    ▷ Create a pointer to a collision array
9:     collision_array.insert(slot);
10:     slot = collision_array;        ▷ Assign the pointer to this slot
11: **end if**
12: slot.insert(Pair(key, value));
13: **if** slot.num_collision >= *T* **then**
14:     extend(root, $\epsilon$, key)        ▷ ePLA reduces the collision
15: **end if**

---

FIG. 12

Node 1–1

$$k_0, sl_0^0, ic_0^0$$

| $k_0, sl_0^1, ic_0^1$ | $k_2, sl_1^1, ic_1^1$ | $k_5, sl_2^1, ic_2^1$ |
|---|---|---|
| Node 2–1 | Node 2–2 | Node 2–3 |

| $k_0, sl_0^2,$ $MR_0$ | $k_1, sl_1^2,$ $MR_1$ | $k_2, sl_2^2,$ $MR_2$ | $k_3, sl_3^2,$ $MR_3$ | $k_4, sl_4^2,$ $MR_4$ | $k_5, sl_5^2,$ $MR_5$ |
|---|---|---|---|---|---|
| Node 3–1 | Node 3–2 | Node 3–3 | Node 3–4 | Node 3–5 | Node 3–6 |

(a)

Node 1–1

$$k_0, sl_0^0, ic_0^0$$

| $k_0, sl_0^1, ic_0^1$ | $k_2, sl_{11}^1, ic_{11}^1$ | $k_5, sl_2^1, ic_2^1$ |
|---|---|---|
| Node 2–1 | Node 2–2 | Node 2–3 |

| $k_0, sl_0^2,$ $MR_0$ | $k_1, sl_1^2,$ $MR_1$ | $k_{21}, sl_{21}^2,$ $MR_{21}$ | $k_{22}, sl_{22}^2,$ $MR_{22}$ | $k_3, sl_3^2,$ $MR_3$ | $k_4, sl_4^2,$ $MR_4$ | $k_5, sl_5^2,$ $MR_5$ |
|---|---|---|---|---|---|---|
| Node 3–1 | Node 3–2 | Node 3–31 | Node 3–32 | Node 3–4 | Node 3–5 | Node 3–6 |

(b)

FIG. 13

S301

When a quantity of pieces of user data corresponding to a first storage unit reaches a quantity threshold, update a first leaf node to one or more second leaf nodes

S302

Update, according to a preset method, a model algorithm corresponding to an internal node in a learned index model

FIG. 14

---

**Algorithm 3** extend(*Seg*, ϵ, *key*)

1: **Input:** *Seg*: the segment that needs to retrain its model on the collision data, ϵ: the given error bounds, *key*: the key triggered this retraining process.
2: **if** *Seg* is leaf segment **then** ▷ Retrain models in leaf segment.
3:     local_kvs = Seg.AllKV(); ▷ Only KVs within this segment.
4:     new_Seg = build_leaf_segments(ϵ, local_kvs.keys());
5:     learned_hash_map(new_Seg, local_kvs);
6: **else** ▷ Update the model in inner segment.
7:     *child_seg* = find(*Seg, key*);
8:     extend(*child_seg*, ϵ, *key*);
9:     inner_keys = Seg.AllKeys();
10:     models = PLA(ϵ, inner_keys);
11:     flush(*Seg*, models);
12: **end if**
13: **if** Tree height increases **then**
    ▷ Optimize the tree height to reduce latency.
14:     Rebuild all inner segments;
15: **end if**

FIG. 15

40

| Obtaining unit 401 | — | Processing unit 402 |

| Leaf node update unit 403 | — | Internal node update unit 404 |

FIG. 16

50

501

Processor

504

502 503

Memory Interface

FIG. 17

## INTERNATIONAL SEARCH REPORT

| International application No. |
| --- |
| **PCT/CN2024/074592** |

| A. | CLASSIFICATION OF SUBJECT MATTER |
| --- | --- |

G06F3/06(2006.01)i; G06F16/22(2019.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, ENTXTC, CNKI: 存储, 读取, 写入, 索引, 模型, 关键字, 键值, 指针, storage, read, write, index, model, key, host

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113722319 A (PINGKAIXINGCHEN (BEIJING) TECHNOLOGY CO., LTD.) 30 November 2021 (2021-11-30) claims 1 and 9, and description, paragraphs [0042]-[0065] | 1-28 |
| A | CN 111581215 A (ZHONG SHIPING) 25 August 2020 (2020-08-25) entire document | 1-28 |
| A | CN 113961643 A (GUANGZHOU HUADUO NETWORK TECHNOLOGY CO., LTD.) 21 January 2022 (2022-01-21) entire document | 1-28 |
| A | CN 107209644 A (HUAWEI TECHNOLOGIES CO., LTD.) 26 September 2017 (2017-09-26) entire document | 1-28 |
| A | US 5261088 A (INTERNATIONAL BUSINESS MACHINES CORP.) 09 November 1993 (1993-11-09) entire document | 1-28 |
| A | US 2014201247 A1 (GOOGLE INC.) 17 July 2014 (2014-07-17) entire document | 1-28 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 March 2024** | **10 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/074592**

| Patent document cited in search report | | | Publication date (day/month/year) | Patent family member(s) | | | Publication date (day/month/year) |
|---|---|---|---|---|---|---|---|
| CN | 113722319 | A | 30 November 2021 | None | | | |
| CN | 111581215 | A | 25 August 2020 | None | | | |
| CN | 113961643 | A | 21 January 2022 | None | | | |
| CN | 107209644 | A | 26 September 2017 | EP | 3916536 | A1 | 01 December 2021 |
| | | | | US | 2023011387 | A1 | 12 January 2023 |
| | | | | EP | 3260971 | A1 | 27 December 2017 |
| | | | | EP | 3260971 | B1 | 10 March 2021 |
| | | | | US | 2018253386 | A1 | 06 September 2018 |
| | | | | US | 10705974 | B2 | 07 July 2020 |
| | | | | WO | 2017113960 | A1 | 06 July 2017 |
| | | | | US | 2020301850 | A1 | 24 September 2020 |
| | | | | US | 11467975 | B2 | 11 October 2022 |
| | | | | CN | 107209644 | B | 28 April 2020 |
| | | | | CN | 111427517 | A | 17 July 2020 |
| US | 5261088 | A | 09 November 1993 | EP | 0453707 | A2 | 30 October 1991 |
| | | | | JPH | 04229372 | A | 18 August 1992 |
| | | | | JPH | 0769922 | B2 | 31 July 1995 |
| US | 2014201247 | A1 | 17 July 2014 | US | 9378304 | B2 | 28 June 2016 |

Form PCT/ISA/210 (patent family annex) (July 2022)

**EP 4 647 889 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310117413